# EUROPEAN PATENT SPECIFICATION

(11) **EP 1 193 053 B1**
(45) Date of publication and mention of the grant of the patent: **17.03.2004**
(21) Application number: 01120964.0
(22) Date of filing: 31.08.2001
(51) Int. Cl.: B32B 27/32, C08J 5/18, B29C 65/00

(54) **New heat-shrinkable multi-layer thermoplastic film and container obtained therefrom**
Neue wärmeschrumpfbare, mehrschichtige, thermoplastische Folie und aus der Folie hergestellter Behälter
Nouveau film thermoplastique multicouche thermoretractable et container obtenu à partir de ce film

(30) Priority: 29.09.2000 EP 00121166
(43) Date of publication of application: 03.04.2002
(73) Proprietor: Cryovac, Inc., Duncan, S.C. 29334 (US)
(72) Inventor: Paleari, Mario, 20010 Pogliano Milanese (MI) (IT); Spigaroli, Romano, Legnano (MI) (IT)
(74) Representative: De Carli, Elda

(56) References cited:
- DE-A- 4 202 982
- DE-A- 19 538 910
- US-A- 4 501 780
- US-A- 4 726 999
- US-A- 5 059 270
- US-A- 5 492 757

## Description

The present invention relates to a multi-layer, heat-shrinkable, thermoplastic film with improved sealability properties and to bags, pouches, and other containers made therefrom by sealing the film to itself.

The invention also relates to the use of such film in packaging food products in which the packaged product is submerged in heated water or autoclaved or retorted for a period of time sufficient for pasteurizing and/or cooking the packaged product, the package being essentially non degradable under such conditions.

The term "pasteurizable" as used herein is intended to refer to packaging material structurally capable of withstanding exposure to pasteurizing conditions while containing a food product. Many food products require pasteurization after they have been hermetically packaged to destroy harmful microbes that grow in the absence of air. Specific pasteurization conditions tend to vary from country to country; however limiting conditions are probably submersion of the hermetically closed package in water at 95°C for one hour. Thus, for a bag to be characterized as pasteurizable, structural integrity of the bag must be maintained during pasteurization, i.e. the bag must have superior high temperature seal strength.

The term "cook-in" as used herein is intended to refer to packaging material structurally capable of withstanding exposure to cook-in time-temperature conditions while containing a food product. Cook-in packaged foods are essentially pre-packaged, pre-cooked foods that go directly to the consumer in that configuration which may be consumed with or without warming. Cook-in time-temperature conditions typically refer to a long slow cook, for example submerging the packaged product in water at 75-85°C for four to six hours. Such cook-in time-temperature requirements are representative of institutional cooking requirements. Under such conditions, a packaging material properly characterized as cook-in will maintain seal integrity.

Preferably for cook-in and pasteurization applications, the packaging film is a solid-state mono-axially or bi-axially oriented, heat-shrinkable film, as solid-state orientation is known to improve the mechanical properties of the end structure and shrink of the packaging material under the cook-in/pasteurization conditions will form a tightly fitting, nice appearing, package.

The term "solid-state orientation" is used herein to describe the orientation process of an extruded and quenched tape carried out at a temperature higher than the highest Tg of the resins making up the structure and lower than the highest melting point of at least one polymer, i.e. at a temperature where the resins, or at least some of the resins, are not in the molten state. For the sake of simplicity "orientation" and "oriented" in the present application will be used to mean "solid-state orientation" and "solid-state oriented" respectively.

Thermoplastic, heat-shrinkable, solid-state oriented films bearing a sealing layer of an ethylene-propylene copolymer or an ethylene-propylene-butene-1 terpolymer are known in the patent literature. For instance US-A-4,501,780 describes a heat-shrinkable, irradiatively cross-linked film comprising a sealing layer of a random copolymer of ethylene and propylene. Irradiation is known in fact to improve the physical properties of the resins and an increased resistance is highly desirable for a structure for cook-in applications. EP-B-485,847 on the other hand describes a bag designed for cook-in applications of a heat-shrinkable multi-layer film comprising a sealing layer of a ter-polymer of ethylene, propylene, and butene.

In both cases the containers made from these films by sealing the inner propylene co- or ter-polymer layer, show an enhanced high temperature strength and grease resistance and are particularly useful therefore for cook-in/pasteurization applications.

One of the problems met with these structures however is the decay of the seal strength of the factory seal with aging. It has been observed in fact that the seal strength of the factory seal, which is typically an impulse seal, sensibly decreases with time. Thus bags obtained from said film should be distributed and used by the customers within a reasonably short period time in order to avoid rejects during the packaging and cook-in/pasteurization processes.

It has now been discovered that it is possible to reduce the variation of the seal strength with aging in these multi-layer films by blending the propylene co-polymer and/or ter-polymer of the sealing layer with from about 5 to about 40 % by weight of an EPDM elastomer.

In particular it has been found that the addition of an amount of from about 5 to about 40 % by weight of an EPDM elastomer to the propylene co-polymer or ter-polymer used for the sealing layer remarkably decreases the cold seal strength variation after aging and that this is true also when the film is irradiated.

A first object of the present invention is therefore a thermoplastic, multi-layer, heat-shrinkable film having a sealing layer comprising a blend of a propylene co-polymer or ter-polymer and from about 5 to about 40 % by weight of an EPDM elastomer.

A second object of the present invention is a thermoplastic, multi-layer, heat-shrinkable film having an irradiated sealing layer comprising a blend of a propylene co-polymer or ter-polymer and from about 5 to about 40 % by weight of an EPDM elastomer.

A third object is a heat-treatable container obtained by sealing, and in particular by impulse sealing, such a film to itself.

A fourth object is the use of such a container in cook-in applications or for pasteurization.

A fifth object is a method of reducing the decay with aging of the seal strength of impulse seals in a multi-layer film having a sealing layer comprising a propylene co-polymer or ter-polymer, said method comprising blending to the propylene co-polymer or terpolymer of the sealing layer an amount of from about 5 to about 40 % by weight of an EPDM elastomer.

### DEFINITIONS

As used herein, the term "film" includes any flexible plastic web, regardless of whether it is a film or a sheet. Preferably, films of use in the present invention have a thickness of 250 µm or less, more preferably of 150 µm or less, and even more preferably of 120 µm or less, typically comprised between about 25 and about 100 µm.

As used herein, the term "heat-shrinkable" refers to a film which shrinks by at least 10 %, preferably at least 15 % and even more preferably at least 20 %, of its original dimensions, in at least one direction, when heated to 90 °C for 5 seconds, in accordance with ASTM method D2732.

As used herein, the term "irradiated" refers to a film that has been irradiated to a dosage level of up to about 200 kGy, typically to a dosage level of from about 40 kGy to about 180 kGy, such as by passing it through an electron beam irradiation unit.

As used herein, the phrases "inner layer", "internal layer", or "intermediate layer" refer to any film layer having both of its principal surfaces directly adhered to another layer of the film.

As used herein, the term "core", and the phrase "core layer" refer to any internal film layer that has a primary function other than serving as an adhesive or compatibilizer for adhering two layers to one another.

As used herein, the term "barrier", and the phrase "barrier layer", as applied to films and/or film layers, is used with reference to the ability of a film or film layer to serve as a barrier to gasses.

As used herein, the phrase "outer layer" or "exterior layer" refers to any film layer having less than two of its principal surfaces directly adhered to another layer of the film.

As used herein, the phrases "seal layer", "sealing layer", "heat seal layer", and "sealant layer", refer to the exterior film layer involved in the sealing of the film to itself.

As used herein, the term "seal" refers to any seal of a first region of a film surface to a second region of a film surface, wherein the seal is formed by heating the regions to at least their seal initiation temperature. The heating can be performed by any one or more of a wide variety of manners, such as by impulse, or using a heated bar, hot air, infrared radiation, etc.

As used herein, the term "outer abuse layer" or "outer abuse resistant layer" refers to the outer layer that is not the sealing layer.

As used herein, the phrase "directly adhered", as applied to film layers, is defined as adhesion of the subject film layer to the object film layer, without a tie layer, adhesive, or other layer therebetween. In contrast, as used herein, the word "between", as applied to a film layer expressed as being between two other specified layers, includes both direct adherence of the subject layer between to the two other layers it is between, as well as a lack of direct adherence to either or both of the two other layers the subject layer is between, i.e., one or more additional layers can be imposed between the subject layer and one or both the layers the subject layer is between.

As used herein, the term "polymer" refers to the product of a polymerization reaction, and is inclusive of homopolymers, copolymers, terpolymers, etc.

As used herein, the terms "copolymer" and "terpolymer" refer respectively to polymers formed by the polymerization reaction of two or three different monomers, and are named in terms of the monomers from which they are produced.

The phrase "propylene copolymer" refers to a copolymer produced by copolymerization of both propylene and ethylene or a (C₄-C₈)-α-olefin, typically butene, wherein the major amount is propylene units and there is a smaller amount of ethylene or (C₄-C₈)-α-olefin derived units.

The term "propylene terpolymer" refers to a terpolymer incorporating a major amount of propylene derived units and smaller amounts of ethylene and of a (C₄-C₈)-α-olefin comonomer, preferably butene or hexene.

As used herein, said terms refer to random co- and ter-polymers.

As used herein, the term "polyolefin" means a thermoplastic homo-, co- or ter-polymer derived from simple olefins, e.g. ethylene, propylene and higher unsaturated aliphatic monomer units, or the halogenated derivatives thereof, as well as the co- or ter-polymers of said simple olefins with co-monomers that are not themselves olefins, e.g. vinyl acetate, acrylic or methacrylic acids, salts, or esters, provided however that the olefin comonomer is present in a major amount. More specifically, included in the term polyolefin are homopolymers of olefins, copolymers of olefins, copolymers of an olefin and a non-olefinic comonomer copolymerizable with the olefin, such as vinyl monomers, and the like. Heterogeneous and homogeneous polymers are included. Specific examples include polyethylene homopolymers, poly-butene, propylene-α-olefin copolymers, ethylene-α-olefin copolymers, butene-α-olefin copolymers, ethylene-vinyl acetate copolymers, ethylene-ethyl acrylate copolymers, ethylene-butyl acrylate copolymers, ethylene-methyl acrylate copolymers, ethylene-acrylic acid copolymers, ethylene-methacrylic acid copolymers, ionomers, chlorinated polyethylene, etc.

As used herein, the phrase "heterogeneous polymer" refers to polymerization reaction products of relatively wide variation in molecular weight and relatively wide variation in composition distribution. Such polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains.

As used herein, the term "polyethylene" refers to homo-polymers derived from the polymerization of ethylene units. Said term is inclusive of LDPE (low-density polyethylene with a density of up to 0.935 g/cm³) and of HDPE (high-density polyethylene characterized by a density higher than 0.935 g/ cm³).

As used herein, the phrase "ethylene-α-olefin copolymer" refers to co- or ter-polymers of ethylene with one or more (C₄-C₈)-α-olefins, such as butene-1, hexene-1, 4-methyl-pentene-1, and octene-1. Said term includes such heterogeneous materials as linear low density polyethylene (LLDPE with a density comprised between about 0.915 and 0.925 g/ cm³), linear medium density polyethylene (LMDPE with a density higher than 0.925 g/ cm³), and very low density polyethylene (VLDPE with a density of less than 0.915 g/ cm³); and homogeneous polymers such as Ziegler-Natta-catalyzed homogenous polymers, as well as metallocene-catalyzed homogenous polymers.

As used herein the term "modified polyolefins" include modified polymers prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like, or by incorporating into the olefin homopolymer or copolymer, an unsaturated carboxylic acid, e.g., maleic acid, fumaric acid or the like, or a derivative thereof such as the anhydride, ester or metal salt or the like.

As used herein, the term polyamide is intended to refer to both polyamides and copolyamides. This term specifically includes those aliphatic polyamides or copolyamides commonly referred to as e.g. polyamide 6 (homopolymer based on ε- caprolactam), polyamide 66 (homopolycondensate based on hexamethylene diamine and adipic acid), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on hexamethylenediamine and adipic acid and ε-caprolactam), polyamide 6/69 (polyamide copolymer based on hexamethylenediamine and azelaic acid and ε-caprolactam), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

As used herein, the phrase "tie layer" refers to any internal layer having the primary purpose of adhering two layers to one another. Tie layers generally comprise a non-polar or slightly polar polymer having a polar group grafted thereon; preferably, tie layers comprise at least one member selected from the group consisting of polyolefin and modified polyolefin, e.g. ethylene-vinyl acetate copolymer, modified ethylene-vinyl acetate copolymer, heterogeneous and homogeneous ethylene-α-olefin copolymer, and modified heterogeneous and homogeneous ethylene-α-olefin copolymer; more preferably, tie layers comprise at least one member selected from the group consisting of anhydride grafted linear low density polyethylene, anhydride grafted low density polyethylene, homogeneous ethylene-α-olefin copolymer, and anhydride grafted ethylene-vinyl acetate copolymer.

Melting information by DSC are reported as second heating data, i.e., the sample is heated at a programmed rate of 10°C/min to a temperature below its critical range, cooled down and then reheated (2^{nd} heating) still at a programmed rate of 10°C/min.

### DETAILED DESCRIPTION OF THE INVENTION

The sealing layer of the thermoplastic, multi-layer, heat-shrinkable film according to the present invention comprises a blend of a propylene co-polymer or ter-polymer with from about 5 to about 40 % by weight of an EPDM elastomer. The above % by weight for the EPDM elastomer is calculated with respect to the overall weight of the blend. The balance to 100 % is therefore of the propylene co-polymer or ter-polymer.

Preferably the propylene copolymer or terpolymer will comprise ≥ about 75 % by weight of propylene units and up to about 25 % by weight of ethylene and/or a (C₄-C₈)-α-olefin.

Typically a propylene copolymer will comprise from about 1 to about 10 % by weight of ethylene or of a (C₄-C₈)-α-olefin, preferably from about 3 to about 6 % by weight.

Preferred propylene copolymers are ethylene-propylene copolymers.

An ethylene-propylene-(C₄-C₈)-α-olefin ter-polymer typically will comprise from about 1 to about 10 % by weight of ethylene and from about 1 to about 20 % by weight of (C₄-C₈)-α-olefin, and preferably from about 1 to about 5 % by weight of ethylene and from about 2 to about 15 % by weight of (C₄-C₈)-α-olefin.

Preferred propylene terpolymers are ethylene-propylene-butene-1 terpolymers.

The melt flow index of said polymers to be used in the construction of the sealing layer in the film according to the present invention generally ranges from between about 0.1 to about 10 g/10' and preferably between from about 0.5 to about 8 g/10'. Melt Flow Index (MI) is measured according to ASTM D1238 (2.16 kg loading at 230°C for the propylene copolymers and 2.16 kg loading at 190 °C for the ethylene-propylene-(C₄-C₈)-α-olefin ter-polymers).

According to a preferred embodiment of the present invention the propylene polymer employed for the blend of the sealing layer is an ethylene-propylene-(C₄-C₈)-α-olefin terpolymer and preferably it is an ethylene-propylene-butene-1 terpolymer.

According to a most preferred embodiment the propylene polymer employed for the blend of the sealing layer is an ethylene-propylene-butene-1 terpolymer containing a total of more than 8 % by weight of ethylene and butene units.

Propylene copolymers, in particular ethylene-propylene copolymers, and blends of different co- and ter-polymers can however be suitably employed.

The EPDM elastomer blended with the propylene co- or ter-polymer in said sealing layer is a terpolymer containing ethylene units, (C₃-C₈)-olefin units and units derived from a non-conjugated diene. Preferably the (C₃-C₈)-olefin units in said terpolymer are propylene units as the terpolymers with higher olefin units have been introduced into the market only recently and therefore are more expensive and less accessible.

The non-conjugated diene may be a straight or branched chain (C₅-C₁₂)-diolefin such as 1,4-hexadiene, 5-methyl-1,4-hexadiene, 1,6-octadiene, and the like or an alicyclic, mono- or multi-ring, (C₆-C₁₂)-diene, such as 1,4-hexadiene, di-cyclopentadiene, 5-methylene-2-norbomene, 5-ethylidene-2-norbornene, and the like.

It is preferably present in the terpolymer in an amount of from about 0.5 to about 12 % by weight, more preferably in an amount of from about 0.5 to about 10 % and even more preferably in an amount of from about 1 to about 6 % by weight.

The amount of EPDM in the blend can be comprised between about 5 and about 40 % by weight. Preferably however it is comprised between about 10 and about 30 % by weight and even more preferably between about 15 and about 25 % by weight.

As indicated above the complement to 100 % in the blend is made with one or more propylene copolymers and/or one or more ethylene-propylene-(C₄-C₈)-α-olefin terpolymers.

The sealing layer may comprise also other polymers in addition to the above blend, provided said other polymers are compatible therewith. In particular polyolefins or modified polyolefins can be included in the sealing layer of the film according to the present invention. According to the present invention the sealing layer will however comprise at least 50 %, preferably at least 70 %, and even more preferably at least 90 % by weight of the above blend. In a most preferred embodiment the sealing layer will essentially consist of the above blend.

The sealing layer will typically be at least 3 µm thick, preferably at least 5 µm thick, and even more preferably at least 7 µm thick. Generally the thickness of said sealing layer may range from about 3 to about 25 µm, depending on the overall film thickness and on the number of layers in the structure.

The film of the present invention comprises besides the sealing layer as described above at least one core gas-barrier layer and one outer abuse layer.

The gas of main concern is oxygen and transmission is considered to be sufficiently low, i.e. the gas-barrier material is relatively gas impermeable, when the transmission rate is below 100 cm³/day.m².atm as measured according to the procedures of ASTM D3985 at 23 °C and 100 % Relative Humidity. To obtain oxygen barrier layers with a transmission rate below that value, PVDC or EVOH, possibly blended with a polyamide, can advantageously be employed. Preferably however the barrier layer will comprise EVOH as this polymer can be irradiated even at high dosage levels without degradation. With an oxygen barrier layer comprising EVOH, an irradiated fully coextruded structure is typically employed what reduces any possible risk of delamination that might be present in case of extrusion coated structures when they are subjected to a drastic heat-treatment.

Once the gas-barrier resin has been selected, its thickness will be set to provide for an oxygen transmission rate below 100 cm³/day.m².atm. Typically the thickness of the barrier layer ranges from about 2 to about 10 µm, preferably from about 3 to about 8 µm, and more preferably from about 4 to about 7 µm.

As the outer abuse layer, polyolefins, polyamides, polyesters, and polyurethanes, can suitably be employed.

Particularly preferred are polyolefins and polyamides.

Particularly when an ethylene-vinyl alcohol copolymer is used as the barrier layer, a moisture-barrier material, such as an ethylene homo- or co-polymer or a propylene homo- or co-polymer is preferably employed for the outer abuse layer. As an example said outer abuse layer may comprise a polyethylene, an ethylene-α-olefin copolymer, an ethylene-vinyl acetate copolymer, an ethylene-methacrylic acid copolymer, an ionomer, a blend thereof with modified polyolefins, a polypropylene, a propylene copolymer, etc.. According to a preferred embodiment of the invention said outer abuse layer will comprise an ethylene-vinyl acetate copolymer. In a most preferred embodiment said outer abuse layer will comprise an ethylene-vinyl acetate copolymer with a vinyl acetate content of from about 4 to about 14 % by weight and more preferably of from about 5 to about 9 % by weight, preferably with a Melt Flow Index lower than 1 g/10' (ASTM D 1238,2.16 kg loading at 190 °C), optionally blended with a heterogeneous or homogeneous ethylene-α-olefin copolymer with a density of from about 0.900 to about 0.935 g/cm³.

According to another preferred embodiment of the invention said outer abuse layer will comprise a polyamide. In a most preferred embodiment said outer abuse layer will comprise a polyamide with a melting temperature higher than 175 °C.

The thickness of said outer abuse layer is not critical and it is generally comprised between about 2 and about 35 µm, preferably between about 6 and about 30 µm and more preferably between about 10 and about 25 µm. When a polyamide is employed the thickness of said outer abuse layer will be preferably lower than 20 and more preferably lower than 15 µm.

Additional layers, such as for instance tie layers to improve interlayer adhesion, or bulky structural layers to provide the overall structure with the desired mechanical properties, or shrink layers to improve the shrink properties of the heat-shrinkable films, can be present as known in the art.

If the structure contains tie layers their thickness is generally comprised between about 0.5 and about 7 µm, and preferably between about 2 and about 5 µm.

In all the film layers, not only in the outer layers, the polymer components may contain appropriate amounts of additives normally included in such compositions. These include slip and anti-block agents such as talc, waxes, silica, and the like, antioxidants, fillers, pigments and dyes, cross-linking inhibitors, cross-linking enhancers, oxygen scavengers, UV absorbers, antistatic agents, anti-fog agents or compositions, and the like additives known to those skilled in the art of packaging films.

Non limitative examples of suitable, preferred, structures for the film according to the present invention are for instance 5-, 6- or 7-ply structures of the following type
Seal/Tie/Gas-barrier/Tie/Outer abuse
Seal/Inner structural/Tie/Gas-barrier/Outer abuse
Seal/Inner structural/Tie/Gas-barrier/Tie/Outer abuse
Seal/Tie/Inner structural/Tie/Gas-barrier/Tie/Outer abuse
wherein the Inner structural layer, that may be equal to or different from the Outer abuse layer, may comprise one or more polymers selected from the groups of polyolefins and polyamides.

The films according to the present invention can be prepared by conventional method of manufacturing, by extrusion, coextrusion or extrusion coating through a round or flat die.

In a preferred method the films according to the present invention are manufactured by coextrusion of the polymers through a round die to provide a thick tubing (called the primary tape) which is immediately and quickly quenched, typically to room temperature by means of a water bath or a water cascade, heated to the orientation temperature and stretched biaxially at this temperature, e.g. by the so-called trapped-bubble process. In said process the internal pressure of a gas such as air is used to expand the diameter of the primary tape to a wider bubble and the higher speed of the upper pinch rolls with respect to the speed at the extrusion is employed to stretch the tape longitudinally. The thus obtained films are thinner than the primary tape. The ratio between the thickness of the primary tape and that of the end film will vary depending on the stretching ratios used. Typically, the stretching ratio is at least about 3 in each direction.

In such a case a tubing is obtained which is converted into bags by cutting lengths of the tubular film and sealing such lengths transversely to obtain end-seal (ES) or bottom seal bags. Alternatively the tubing is slit longitudinally and sealed in such a way to obtain transverse-seal (TS) or side seal bags.

Preferably the film according to the present invention is irradiated. Irradiation may be accomplished by the use of high-energy electrons. Preferably electron radiation up to about 180 kGy dosage level is employed. The irradiation source can be any electron beam generator operating in a range of about 150 kV to about 6 MV with a power output capable of supplying the desired dosage. Many apparatuses for irradiating films are known to those skilled in the art. Irradiation is usually carried out at a dosage of from about 40 to about 160 kGy, preferably at a dosage of from about 50 to about 150 kGy, and more preferably at a dosage level of from about 60 to about 140 kGy. Irradiation can be carried out conveniently at room temperature, although higher and lower temperatures, for example 0 °C to 60 °C, may be employed. Irradiation may be carried out either before or after orientation. Preferably however irradiation is carried out on the primary tape before orientation.

Before or after converting the tubing into bags, the film according to the present invention may optionally be subjected to other types of energetic radiation treatments that may have different aims. As an example the film may be subjected to a corona discharge treatment on the outer abuse resistant surface to improve the print receptivity characteristics of said outer surface or it may be subjected to a corona treatment of the sealing surface to improve the meat adhesion properties of said surface.

The bags obtained from the film according to the present invention show outstanding properties in terms of cold and hot seal strength. In particular they show a very good cold and hot seal strength when tested in-line and almost the same values after aging.

For use in cook-in or pasteurization applications, the food item is inserted into the bag, the package is vacuumized and closed by sealing or by clipping, and then subjected to various heat treatments such as cooking at a temperature up to about 85 °C for several hours or pasteurization treatment at 95 °C for 1 hour. The bags manufactured from the film of the present invention withstand these treatments without revealing damages or weakening of the seals, including the factory seals, even when they are aged.

The examples that follow only purport to illustrate the invention and not to restrict its field of application.

The following abbreviations have been used in the following Examples to identify the materials:
- EPC1: ethylene-propylene copolymer (3.3 % by weight of ethylene units) with MI = 5 g/10' (ASTM D-1238 - 2.16 kg loading, 230 °C) - (ELTEX™ PKS 400 by Solvay)
- EPC2: ethylene-propylene copolymer (3.2 % by weight of ethylene units) with MI = 5.6 g/10' (ASTM D-1238 - 2.16 kg loading, 230 °C) - (ELTEX™ PKS 409 by Solvay)
- EPBT1: ethylene-propylene-butene-1 terpolymer (containing 2 % by weight of butene units and 4 % by weight of ethylene units) with MI = 5 g/10' (ASTM D-1238-2.16 kg loading, 230 °C) - M.p. 130 °C (NOVOLEN™ 3520LX by BASF)
- EPBT2: ethylene-propylene-butene-1 terpolymer (containing 7 % by weight of butene units and 2 % by weight of ethylene units) with MI = 5 g/10' (ASTM D-1238-2.16 kg loading, 190 °C) - M.p. 125 °C (ELTEX™ PKS 309 by Solvay)
- EPBT3: ethylene-propylene-butene-1 terpolymer (containing 13 % by weight of butene units and 1 % by weight of ethylene units) with MI = 5 g/10' (ASTM D-1238-2.16 kg loading, 190 °C) - M.p. 131 °C (ELTEX™ PKS 359 by Solvay)
- LG1: anhydride modified EVA-based adhesive with MI = 0.9-1.3 g/10' (ASTM D-1238 - 2.16 kg loading, 190 °C) - (BYNEL™ CXA 3062 by DuPont).
- LG2: anhydride modified EVA-based adhesive with MI = 0.85 g/10' (ASTM D-1238-2.16 kg loading, 190 °C) - (BYNEL™ 38E723 by DuPont)
- LG3: anhydride modified LLDPE adhesive with MI = 0.9-1.5 g/10' (ASTM D-1238-2.16 kg loading, 190 °C) - (BYNEL™ 4104 by DuPont).
- LG4: anhydride modified LLDPE adhesive with MI = 2.0 g/10' (ASTM D-1238 - 2.16 kg loading, 190 °C) - (TYMOR™ 1203 by Rohm&Haas).
- LG5: anhydride modified LLDPE adhesive with MI = 4.1 g/10' (ASTM D-1238 - 2.16 kg loading, 190 °C) - (ADMER™ NF538E by Mitsui).
- LG6: anhydride modified VLDPE adhesive with MI = 1.5 g/10' (ASTM D-1238 - 2.16 kg loading, 190 °C) - (ADMER™ AT1094E by Mitsui).
- LG7: anhydride modified ethylene-propylene-butene terpolymer adhesive with MI = 6.5 g/10' (ASTM D-1238 - 2.16 kg loading, 230 °C) - (OREVAC™ 67785 by Elf Atochem).
- EVA1: EVA (6% VA) with MI = 2.5 g/10' (ASTM D-1238 - 2.16 kg loading, 190 °C)-(ESCORENE™ FL 00206 by Exxon).
- EVA2: EVA (13% VA) with MI = 2.5 g/10' (ASTM D-1238 - 2.16 kg loading, 190 °C)-(ESCORENE™ FL 00212 by Exxon)
- EVA3: EVA (13% VA) with MI = 0.4 g/10' (ASTM D-1238 - 2.16 kg loading, 190 °C)-(EVATANE™ 1003 VN 4 by Elf Atochem)
- EVA4: EVA (14% VA) with MI = 0.25 g/10' (ASTM D-1238 - 2.16 kg loading, 190 °C)-(ESCORENE™ FL 00014 by Exxon)
- LLDPE: heterogeneous ethylene-octene-1 copolymer with MI = 1 g/10' (ASTM D1238-2.16 kg loading, 190°C) d = 0.920 g/cm³ and m.p. = 124 °C (DSC - 2^{nd} heating)-(Dowlex 2045 E by Dow)
- EBA: Ethylene-butyl acrylate copolymer (7% BA) with MI = 1.1 g/10' (ASTM D-1238 - 2.16 kg loading, 190 °C) (NCPE-6472 by Borealis)
- EMAA: Ethylene-methacrylic acid copolymer (12% MAA) with MI = 1.4-2.0 g/10' (ASTM D-1238 - 2.16 kg loading, 190 °C) (NUCREL™ 1202 HC by DuPont)
- EPDM1: Ethylene-propylene-diene terpolymer with about 72 % by weight of ethylene and about 3 % by weight of diene (5-ethylidene-2-norbornene) with MI = 2.0 g/10' (ASTM D-1238 - 2.16 kg loading, 230 °C) (EP-T-2370 by BUNA)
- EPDM2: Ethylene-propylene-diene terpolymer with about 79 % by weight of ethylene and about 6 % by weight of diene (5-ethylidene-2-norbornene) with MI = 1.5 g/10' (ASTM D-1238 - 2.16 kg loading, 230 °C) (Vistalon 7800 by Exxon)
- BL 1: Blend of EPBT2 (80 % by weight) and EPDM 1 (20 % by weight)
- BL2: Blend of EPBT3 (80 % by weight) and EPDM1 (20 % by weight)
- BL3: Blend of EPC2 (70 % by weight) and EPDM 1 (30 % by weight)
- BL4: Blend of EPBT1 (75 % by weight) and EPDM1 (25 % by weight)
- BL5: Blend of EPBT3 (85 % by weight) and EPDM1 (15 % by weight)
- BL6: Blend of EPBT3 (80 % by weight) and EPDM2 (20 % by weight)
- EVOH: Ethylene-vinyl alcohol copolymer with 44 % by mole of ethylene and MI = 5.5 g/10' (ASTM D-1238 - 2.16 kg loading, 190 °C) - (EVAL™ EP-105A by Kuraray)
- PA: Copolyamide 6/66 with m.p. 196 °C (Capron CA95WP by Allied Signal)

### Example 1

A 6-layer film having the following structure (with the layer thickness in parentheses) BL1 (13 µm)/EVA3 (13 µm)/LG1 (4 µm)/EVOH (4 µm)/LG1 (4 µm)/EVA1 (22 µm) has been prepared by coextrusion from a round die, followed by a quick quenching with cold water, irradiation to a dosage level of 105 kGy, re-heating with hot water (96 °C) and biaxial orientation at this temperature with stretching ratios of 3.0 x 3.4 (MD x TD).

### Example 1a

The procedure of Example 1 has been exactly repeated but replacing LG1 with LG2 to give the film of Example 1a.

### Example 2

The film of this Example has been prepared by submitting the tubing of Example 1 to a corona treatment at 240 mA.

### Example 2a

The film of this Example has been prepared by submitting the tubing of Example 1a to a corona treatment at 240 mA.

### Example 3

The film of Example 3 has been prepared by following exactly the same procedure as in

### Example 1 but replacing BL1 with BL2.

### Example 3a

The film of this Example has been prepared by following the same procedure as in Example 1a but replacing BL1 with BL2.

### Example 4

The film of this Example has been prepared by submitting the tubing of Example 3 to a corona treatment at 240 mA.

### Example 4a

The film of this Example has been prepared by submitting the tubing of Example 3a to a corona treatment at 240 mA.

### Examples 5 to 10

The films of Examples 5 to 10, have the general formula A/B/C/D/C/E, wherein the resins employed for the various layers are as indicated in following Table I, and are prepared by following essentially the same procedure of Example 1

**TABLE I**

| Ex no. | A | B | C | D | E |
|---|---|---|---|---|---|
| 5 | BL1 | EBA | LG1 | EVOH | EVA1 |
| 6 | BL1 | EVA1 | LG1 | EVOH | EMAA |
| 7 | BL2 | EVA1 | LG1 | EVOH | EVA1 |
| 8 | BL3 | EVA3 | LG1 | EVOH | EVA1 |
| 9 | BL4 | EVA2 | LG1 | EVOH | EVA1 |
| 10 | BL5 | EVA3 | LG1 | EVOH | EVA1 |

### Example 11

A 6-layer film having the following structure (with the layer thickness in parentheses) BL2 (12 µm)/80%LLDPE (9 µm)/EVA4 (9 µm)/LG2 (4 µm)/EVOH (4 µm)/PA (3 µm)
20%EVA4
has been prepared by coextrusion from a round die, followed by a quick quenching with cold water, irradiation to a dosage level of 64 kGy, re-heating with hot water (96 °C) and biaxial orientation at this temperature with stretching ratios of 3.1 x 3.4 (MD x TD).

### Example 12

The film of this Example has been obtained by following the same procedure as in Example 11 but irradiating at 105 kGy.

### Example 13

The film of this Example is obtained by following the same procedure of Example 11 but replacing BL2 with BL6.

### Examples 14-18

The films of Examples 14 to 18 are obtained by following essentially the same procedure of Example 11. These films share the following 5-layer structure :
BL2 (12 µm)/50%LLDPE (17 µm)/X (5 µm)/EVOH (3 µm)/PA (3 µm)
50%EVA4 wherein X has the following meaning

| Example no. | X |
|---|---|
| 14 | LG7 |
| 15 | LG6 |
| 16 | LG5 |
| 17 | LG4 |
| 18 | LG3 |

### Example 19

The film of Example 19 is obtained by following the procedure of Example 17 but increasing the thickness of the outer PA layer to 6 µm.

### Comparative Examples 20, 21, 22 and 23

The films of Comparative Examples (CE) 20, 21, 22, and 23 have been obtained by following exactly the same procedure as in Examples 1, 2, 3, and 4 respectively but using - as the sealing layer ― only EPBT2 (CE 20 and 21) or EPBT3 (CE 22 and 23) with no EPDM.

The tubular films of Examples 1 to 4 and of Comparative Examples 20 to 23 have been converted into 300 x 500 mm end-seal bags by a continuous process. The bag-making machine was run at 120 bags/minute and the impulse of the sealing wire was set at 14.5 A. Cold and hot seal strength of the obtained bags have been evaluated by the methods indicated hereinbelow in-line and after 3-week of aging.

The cold seal strength has been evaluated by the test of the Parallel Plates (PP) that provides for a bag to be confined between two plates a specified distance apart and be inflated until the seal fails. The pressure level inside the bag at the point of failure is a measure of the quality of the seal. The results of this test are reported in inches of water pressure (IOWP).

The hot seal strength has been evaluated by the test of the Variable Pressure Hot Burst (VPHB) that provides that a clean sealed bag be inflated to a specified dwell pressure and the seal area be submerged in hot water at 85 °C. After ten seconds the pressure inside the bag is increased at a specified rate, ranging from 1 to 7 inches of water/second (2.49 to 17.43 mbar/s). The pressure at burst is a measure of seal quality. The results are reported in mbar.

The results obtained in these tests are summarized in following Table II

**Table II**

| | PP (IOWP) in-line | PP (IOWP) aged | VPHB (mbar) in-line | VPHB (mbar) aged |
|---|---|---|---|---|
| Ex. 1 | 202 | 188 | 104 | 105 |
| CE 20 | 208 | 180 | 110 | 106 |
| Ex.2 | 205 | 197 | 107 | 107 |
| CE 21 | 208 | 182 | 106 | 106 |
| Ex. 3 | 207 | 204 | 96 | 92 |
| CE 22 | 215 | 202 | 97 | 98 |
| Ex. 4 | 203 | 202 | 92 | 95 |
| CE 23 | 215 | 198 | 103 | 100 |

These results show a % variation of the cold seal strength with aging with is much higher in the Comparative Examples with respect to the Examples of the present invention. In particular the % variation of the cold seal strength with aging is about 4-7 % with the films of Examples 1 and 2 according to the present invention while it is about 12-1,4 % for the films of Comparative Examples 20 and 21, differing only in the composition of the sealing layer which does not comprises EPDM.

For the films of Examples 3 and 4 according to the present invention the % variation is about 1 %, while for the films of Comparative Examples 22 and 23, said % variation is about 6-8%.

### Examples 24 and 25

10 bags (300 x 500 mm) were made with the film of Example 2 and 10 bags of the same size were made with the film of Example 4. They were all aged for three weeks and then filled with 2.1 liter of water mixed with 20 cm³ of olive oil, sealed and tested in a simulated cook-in test where the bags were submerged in hot water at the temperature and for the time indicated in following Table III.

Example 24 refers to the bags made with the film of Example 2 and Example 25 to the bags made with the film of Example 4.

**Table III**

| Temperatures/time | Total cooking time (h) | Number of rejects | |
|---|---|---|---|
| | | Ex. 24 | Ex. 25 |
| 1) After 1 h at 70 °C | 1 | 0 | 0 |
| 2) 1 + 1 h at 75 °C | 2 | 0 | 0 |
| 3)2+1 h at80°C | 3 | 0 | 0 |
| 4) 3 + 1 h at 85 °C | 4 | 0 | 0 |
| 5)4+ 1 h at90°C | 5 | 0 | 0 |
| 6) 5 + 1 h at95°C | 6 | 0 | 0 |
| 7) 6 + 1 h at 100 °C | 7 | 0 | 0 |
| 8) 7 + 1 h at 100 °C | 8 | 0 | 0 |

## Claims

1. A thermoplastic, multi-layer, heat-shrinkable film having a sealing layer comprising a blend of a propylene co-polymer or ter-polymer with from about 5 to about 40 % by weight of an EPDM elastomer, calculated with respect to the overall weight of the blend.

2. The film of claim 1 wherein the amount of EPDM elastomer in the blend of the sealing layer is comprised between about 10 and about 30 % by weight and more preferably between about 15 and about 25 % by weight over the weight of the blend.

3. The film of claim 1 wherein the sealing layer essentially consists of a blend of a propylene co-polymer or ter-polymer with from about 5 to about 40 % by weight of an EPDM elastomer.

4. The film of claim 1 wherein the propylene co-polymer is ethylene-propylene copolymer and the propylene ter-polymer is ethylene-propylene (C₄-C₈)-α-olefin terpolymer.

5. The film of claim 1 wherein the sealing layer is irradiated.

6. The film of claim 1 further comprising a core gas-barrier layer and an outer abuse resistant layer.

7. The film of claim 6 wherein the outer abuse resistant layer comprises a polymer selected from polyolefins and polyamides.

8. A heat-treatable container obtained by sealing the sealing layer of the film of claim 1 to itself.

9. The heat-treatable container of claim 8 which is a bag or a pouch.

10. A bag or pouch obtained by sealing the sealing layer of the film of claim 1 to itself, for use in cook-in and pasteurization applications.

11. A method of reducing the decay with aging of the seal strength of impulse seals in a multi-layer film having a sealing layer comprising a propylene co-polymer or a propylene ter-polymer, said method comprising blending to the propylene co-polymer or ter-polymer of the sealing layer an amount of from about 5 to about 40 % by weight of an EPDM elastomer, calculated with respect to the overall weight of the blend.

## Patentansprüche

1. Wärmeschrumpfbare Mehrschichtfolie mit einer Siegelschicht, die eine Mischung aus einem Propylenco- oder terpolymer mit etwa 5 bis etwa 40 Gew.% eines EPDM Elastomers, bezogen auf das Gesamtgewicht der Mischung, umfasst.

2. Folie nach Anspruch 1, bei der die Menge des EPDM Elastomers in der Mischung der Siegelschicht zwischen etwa 10 und etwa 30 Gew.% und bevorzugter zwischen etwa 15 und etwa 25 Gew.%, bezogen auf das Gewicht der Mischung, beträgt.

3. Folie nach Anspruch 1, bei der die Siegelschicht im Wesentlichen aus einer Mischung eines Propylenco- oder terpolymers mit etwa 5 bis etwa 40 Gew.% eines EPDM Elastomers besteht.

4. Folie nach Anspruch 1, bei der das Propylencopolymer Ethylen-Propylen-Copolymer und das Propylenterpolymer Ethylen-Propylen-(C₄-C₈)-α-Olefin-Terpolymer ist.

5. Folie nach Anspruch 1, bei der die Siegelschicht bestrahlt ist.

6. Folie nach Anspruch 1, die außerdem eine Kern-Gasbarriereschicht und eine äußere Schutzschicht umfasst.

7. Folie nach Anspruch 6, bei der die äußere Schutzschicht ein Polymer ausgewählt aus Polyolefinen und Polyamiden umfasst.

8. Wärmebehandelbarer Behälter erhalten durch Siegelung der Siegelschicht der Folie gemäß Anspruch 1 an sich selbst.

9. Wärmebehandelbarer Behälter gemäß Anspruch 8, der ein Beutel oder ein Beutelchen ist.

10. Beutel oder Beutelchen erhalten durch Siegelung der Siegelschicht der Folie gemäß Anspruch 1 an sich selbst zur Verwendung in Anwendungen zum Garen in der Verpackung und zur Pasteurisierung.

11. Verfahren zur Verringerung der alterungsbedingten Abnahme der Siegelfestigkeit von Impulssiegelungen in einer Mehrschichtfolie mit einer Siegelschicht, die ein Propylencooder terpolymer umfasst, bei dem zu dem Propylenco- oder terpolymer der Siegelschicht eine Menge von etwa 5 bis etwa 40 Gew.% eines EPDM Elastomers, bezogen auf das Gesamtgewicht der Mischung, zugemischt wird.

## Revendications

1. Film thermoplastique, multicouche, thermorétractable ayant une couche de scellement comprenant un mélange d'un copolymère ou terpolymère de propylène avec environ 5 à environ 40% en poids d'un élastomère de EPDM, calculé par rapport au poids total du mélange.

2. Film de la revendication 1 où la quantité de l'élastomère de EPDM dans le mélange de la couche de scellement est comprise entre environ 10 et environ 30% en poids et, mieux, entre environ 15 et environ 25% en poids par rapport au poids du mélange.

3. Film de la revendication 1 où la couche de scellement consiste essentiellement en un mélange d'un copolymère ou terpolymère de propylène avec environ 5 à environ 40% en poids d'un élastomère de EPDM.

4. Film de la revendication 1 où le copolymère de propylène est un copolymère d'éthylène-propylène et le terpolymère de propylène est un terpolymère d'éthylène-propylène-α-oléfine (C₄-C₈)

5. Film de la revendication 1 où la couche de scellement est irradiée.

6. Film de la revendication 1 comprenant de plus une couche d'âme formant barrière contre les gaz et une couche externe de résistance à la violation.

7. Film de la revendication 6 où la couche externe de résistance à la violation comprend un polymère sélectionné parmi des polyoléfines et des polyamides.

8. Conteneur traitable à la chaleur obtenu par scellement de la couche de scellement du film de la revendication 1 à elle-même.

9. Conteneur traitable à la chaleur de la revendication 8 qui est un sac ou une poche.

10. Sac ou poche obtenu par scellement de la couche de scellement du film de la revendication 1 à elle-même pour une utilisation dans des applications de cuisson et de pasteurisation.

11. Méthode de réduction de la dégradation avec le vieillissement de la force de jonction de joints à impulsions dans un film multicouche ayant une couche de scellement comprenant un copolymère de propylène ou un terpolymère de propylène, ladite méthode consistant à mélanger, au copolymère ou terpolymère de propylène de la couche de scellement, une quantité d'environ 5 à environ 40% en poids d'un élastomère de EPDM, en calculant par rapport au poids total du mélange.
